# EUROPEAN PATENT APPLICATION

(11) **EP 0 599 788 A1**
(43) Date of publication of application: **01.06.1994**
(21) Application number: 93830465.6
(22) Date of filing: 24.11.1993
(51) Int. Cl.: B64C 31/02, B64C 3/38

(54) **Device for the continuous adjustment, in flight, of the inclination of the wing structure in an ultralight aircraft of the pendular type**

(30) Priority: 27.11.1992 IT FI920228
(71) Applicant: Del Mastro, Donato, I-50013 Campi Bisenzio, Firenze (IT)
(72) Inventor: Del Mastro, Donato, I-50013 Campi Bisenzio, Firenze (IT)
(74) Representative: Mannucci, Gianfranco, Dott.-Ing.

(57) **Abstract**

In order to adjust the angular position of the structure (107,207,307) of the wing profile with respect to the carriage (105,305) (and hence the lift value), provision is made for a transmission which can be operated in flight via a servomechanism (318) and is designed to modify the angle of attack of the wing profile with respect to the carriage, about a transverse hinging axis (110,210,310).

## Description

The object of the invention is to be able continuously to vary and adjust in flight the inclination (α angle) of the delta wing profile (also called "sail") of an ultralight aircraft of the pendular hang-glider type or the like, with a consequent variation in the lift value of the sail itself and minimum speed of the aircraft, so as to obtain this wing lift value.

These and other objects will emerge from the description which follows.

In conventional ultralight aircraft there are only two fixed positions for adjusting this inclination, or so-called α angle; this adjustment position must be set beforehand on the ground before take-off by displacing the attachment point where the sail is fixed to the carriage, while in flight the pilot is able to vary this condition only by applying a continuous muscular force to a special transverse bar.

If we imagine a theoretical intermediate value of the α angle as being the "ZERO POINT" and call this angle β, via the on-ground adjustments it is possible to obtain the following:
a) the "NOSE-DOWN" position with adjustment beforehand of the angle so that α > β;
b) the "PULL-UP" position with adjustment beforehand of the angle so that α < β.

In the nose-down position, with the angle α > β, the position of the sail in flight is flatter, with greater air cleavage, resulting in the need for a higher velocity V in order to obtain the necessary inflight lift and support a weight P of the aircraft applied to the sail; this position consequently results in the need for a higher rotational speed of the engine and the propeller of the aircraft, with a consequent greater thrust; in order to be able to perform in this position of the sail the take-off and landing maneuvers, owing to the higher velocity, more space is required to reach this velocity during take-off and perform braking during landing.

In the pull-up position (the opposite of the preceding position), with the angle α < β, the wing lift value is greater with a lower velocity V required to generate the force F, with the consequent need for a reduced thrust of the engine and reduced speed of rotation of the propeller of the aircraft; in this position the space required for the take-off and landing maneuvers is smaller since a lower velocity must be reached for take-off or braking during landing. The flying speeds are reduced.

With the aforementioned conventional system, the fact of having two fixed positions of the α angle and having to choose, on the ground, which of the two positions to adopt during the flight results in considerable restrictions during the flight itself, among other things with regard to unforeseen events or different flying conditions which may occur.

With the conventional system of attachment, the pilot is able to obtain manually a minimum variation in the α angle during the flight via a transverse bar of the tie-rod type which causes the sail to be inclined, but this is physically tiring for the pilot and may distract him from the normal flying operations; this operation of varying the position of the sail during the flight can therefore only be performed for short periods of time.

These and other drawbacks are avoided with the invention, which relates to a device for adjusting the position of the structure of the wing profile with respect to the carriage, and hence the lift value in ultralight aircraft. Substantially the device comprises a transmission which can be operated in flight and which is designed to modify the angle of the wing profile about a transverse hinging axis. The adjustment may consist directly of an angular adjustment, or also of longitudinal translation which, by displacing the hinging point for attachment to the carriage, results in a modification of the angular position of the sail structure.

The transmission may be actuated by a servomotor, but may also be operated manually, i.e. may be operated by the pilot during the flight.

Said transmission may be advantageously of the non-reversible type, so that the wing structure is fixed in the position once reached; for example the transmission may comprise a worm reduction unit. Alternatively, the transmission operated by the servomechanism may comprise a self-braking drive system.

In the application to an ultralight aircraft comprising a conventional transverse oscillating bar of the so-called triangle type for manually displacing within certain limits a moving element to which the wing structure is connected, the said transmission may be designed to vary the longitudinal or angular position of the wing structure with respect to the moving element maneuvered by said bar.

Each solution ideally comprises two end-of-travel stops designed to limit the (angular or longitudinal) travel path along which the wing structure may be displaced by said transmission.

The invention will be more clearly understood with reference to the description and accompanying drawing, which illustrates a non-limiting example of embodiment of the invention itself. In the drawing:
Figs. 1A, 1B and 1C show in diagrammatic form three positions which are possible with the conventional system where adjustment is performed on the ground;
Figs. 2 and 3 show in diagrammatic form two positions which are possible with the device in question illustrated schematically;
Fig. 4 shows a particular embodiment with a servomotor operating the transmission for angular adjustment.

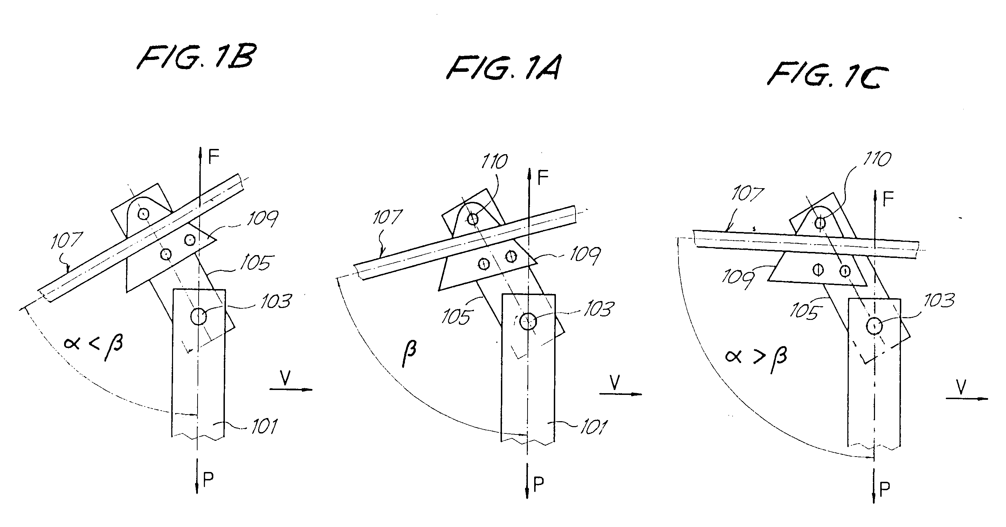

According to the illustrations in the accompanying drawing, in the conventional solution (Figs. 1A, 1B, 1C) 101 denotes the structure of the carriage and 103 the point where it is hinged with a moving element 105 which can be oscillated about the hinging point 103 by means of manual operation of the transverse bar directly by the pilot who has to maintain the variation in position effected manually with the bar by continuing to operate the bar itself for the whole of the time during which the position of the wing surface is corrected during the flight. The conventional solution requiring adjustment on the ground is provided, between the moving element 105 and the longitudinal shaft 107 of the sail, the inclination of which determines the inclination of the wing surface, i.e. the structure of the movable wing, with a system comprising an intermediate member 109 which is hinged at 110 with the moving element 105; said intermediate member 109 may be set at an angle chosen, for example, from among two or at the most three positions and therefore is not continuously adjustable and in any case must be preselected on the ground before the start of the flight, with the disadvantages already mentioned. Only by manual means and by applying muscular force to the transverse adjustment bar is it possible to vary - within a limited range and with persistent muscular effort - the angle set on the ground via angular adjustment in the region of the hinging point 103.

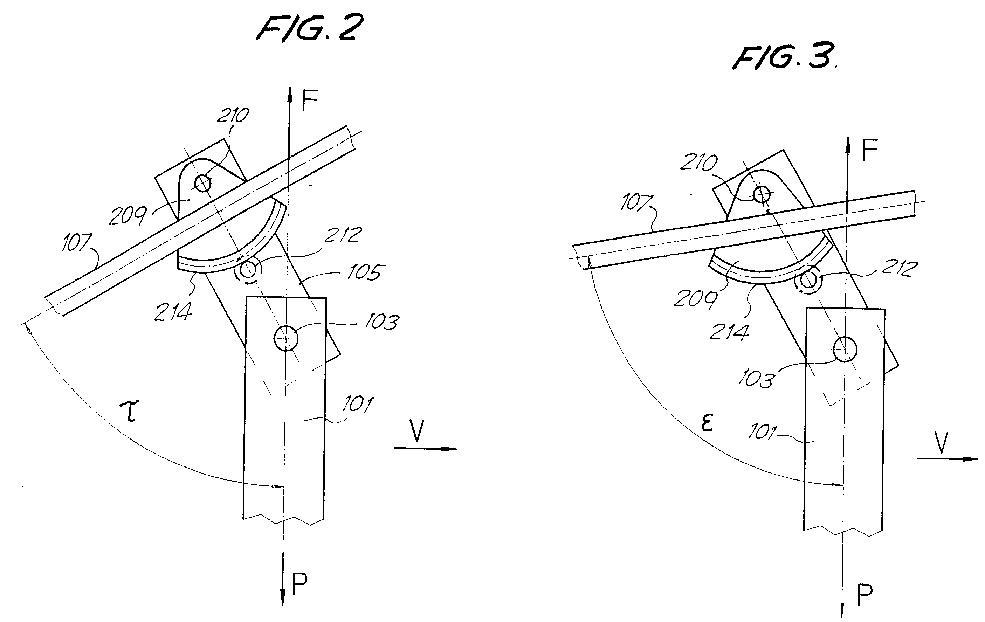

In the diagram of the device forming the subject of the invention, illustrated in Figs. 2 and 3, similar parts are denoted by the same reference numbers used in Figs. 1A, 1B and 1C for the conventional solution. The longitudinal shaft 107 of the wing structure or sail is mounted on an intermediate member 209 which is hinged at 210 (in the same way that the member 109 is hinged at 110 in the conventional solution), and the angular adjustment of the intermediate member 209 with respect to the moving element 105 about the axis 210 is obtained by means of a servomotor which operates a sprocket wheel 212 meshing with a sector gear 214 forming part of the intermediate member 209. The servomotor operating the sprocket wheel 212 may be activated by the pilot even in flight so that it is possible to correct at any time, even during the flight, the wing position, i.e. the angle which the wing structure may assume with respect to the carriage. Therefore, whereas in the conventional solution diagrammatically illustrated in Figs. 1A, 1B and 1C, it is possible to set an α angle which may be greater or less than the angle β, in accordance with the two positions illustrated in Figs. 1B and 1C relative to the position in Fig. 1A, in the solution shown in Figs. 2 and 3 adjustment is firstly performed during the flight and not only on the ground and, secondly, the adjustment may be continuous and therefore many positions assumed. The position assumed may be maintained by fixing the sprocket wheel 212 or by making use of a transmission of the non-reversible type or by blocking the motor of the servomotor.

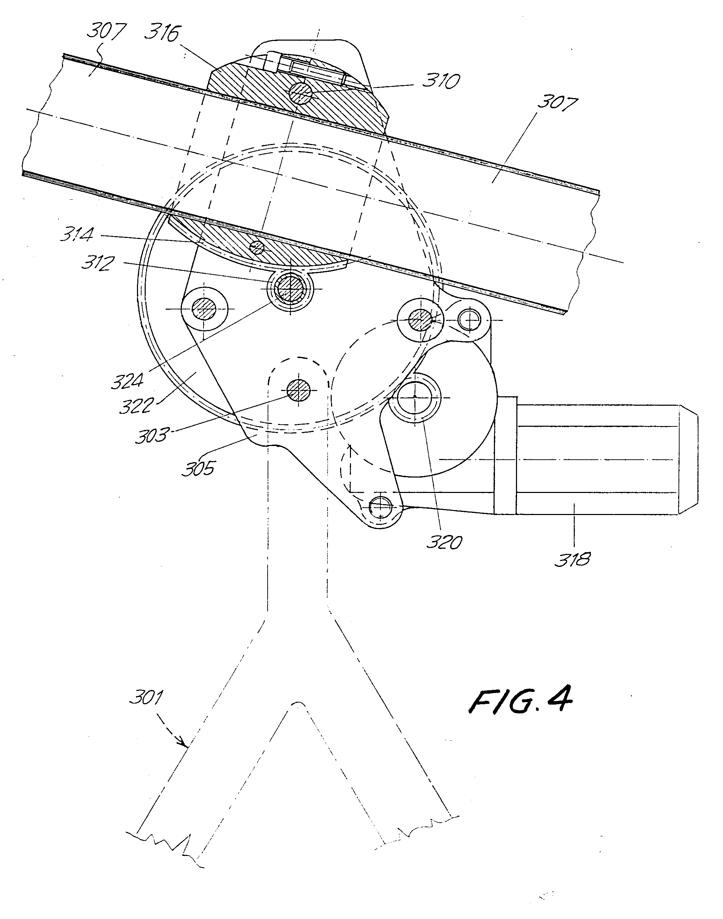

In the embodiment illustrated in Fig. 4, 301 denotes schematically the structure of the carriage which is suspended from the hinging point 303, about which the carriage may be made to oscillate with respect to the moving element of the wing structure by means of the system of the manually operated transverse bar. The hinging point 303 connects the structure of the carriage 301 to an intermediate moving element 305 (equivalent to the element 105) which supports the wing structure, the longitudinal shaft or so-called "keel" of which is denoted by 307; this shaft 307 is engaged with a support 316 in such a way that longitudinal and angular adjustment are possible. The support 316 oscillates about a hinging point 310 which connects it to the intermediate member 305, forming the moving element which can be adjusted using the bar. A servomechanism 318 is fixed to the intermediate member 305 - forming part of the moving element which can be adjusted using the bar for performing manual operations - the output shaft 320 of which servomechanism meshes with a gear 322 with a much larger radius so as to form overall a speed reducer, the gear 322 being rotatable about 324 mounted on the intermediate member 305; the shaft 324 has mounted on it a sprocket wheel 312 meshing with a sector gear 314, which corresponds to the sector gear 214. This sector gear 314 is formed respectively so as to be integral with the support 316 oscillating about the axis 310. This solution is perfectly equivalent to the example illustrated diagrammatically in Figs. 2 and 3, but has a more constructive configuration.

In place of a servomotor such as that denoted by 318, it is possible to provide a mechanical transmission based on a system which is operated manually (in addition to or instead of being servocontrolled) by the pilot.

According to the variation already mentioned concerning the method of effecting adjustment, it is possible to envisage a servomotor system which ensures, instead of an angular movement of the wing structure connected to the component 107 or 307, a solution in which the shaft of the keel or in any case the wing structure may be displaced longitudinally (i.e. inclined along an axis with an infinite radial distance) so as to modify the point of action of the weight force dependent upon the carriage; this results in modification of the angle of attack of the wing structure and hence of the position of the "sail" with respect to the carriage, but still with the possibility of effecting maneuvers in flight as with the examples already illustrated.

With the device described, there are no longer two fixed values of the α angle, but a range of variation of this angle between a minimum value τ and a a maximum value ε, within which it is possible to vary the α angle formed by the axis of the shaft of the sail (called "keel") and the barycentric axis of the aircraft.

With the device described it is possible to vary this angle of inclination during the flight, adapting it to the flying conditions required. This possibility proves to be extremely useful, among other things, in the case of possible partial failure of the thrust motor. In fact, by being able to vary the angle of attack α of the sail, it is possible to assume at any moment the "pull-up" position so as to obtain - even with a sudden decrease in the thrust of the motor and propeller - a wing lift value which allows one to continue the flight, albeit at a reduced speed. Furthermore, with the possibility of varying the angle of attack from the pilot's seat, it is possible to take-off and land in restricted spaces, with the sail in the "pull-up" position, and maintain a high flying speed with the sail in the "nose-down" position.

Nevertheless, with the device applied to the element movable using the transverse bar provided for manual maneuvers, it is still possible with this aircraft to change the position during the flight by means of the said manual bar and it is also possible to choose, on the ground, the position of the sail to be assumed during the flight, as with the conventional system.

Varying the α angle between the axis of the shaft of the sail and the carriage of the aircraft results merely in displacement of the point of application of the weight P of the system along the axis itself of the sail, with a consequent change in the angle of attack of the sail with respect to the direction of travel. A similar result may be achieved by sliding longitudinally the shaft of the sail in its seat, forward or backward, also by means of a servomechanism operated from the pilot's seat, as already described.

Therefore, the device may be made to rotate, in combination with the support of the sail shaft on the carriage, on the fixing pivot by means of a servomechanism, so as to vary the α angle formed by the axis of the shaft itself and the barycentric axis of the aircraft, whatever the type of servomechanism used, be it manual, automatic or semiautomatic.

In another embodiment, the device may be combined with the support of the sail shaft so as to rotate and with the shaft so as to slide in an axial direction in its own support via a servomechanism, so as to be able to vary axially the point of application of the barycentric axis on the shaft itself; the variations in the α angle and/or axial position of the shaft with respect to the barycentric axis of the carriage may be obtained individually or simultaneously, whatever the types of servomechanism used, be they manual, automatic or semiautomatic.

It is understood that the drawing merely illustrates an example provided only by way of a practical demonstration of the invention, it being possible to vary the forms and arrangements of this invention without departing thereby from the scope of the basic idea of the invention itself.

## Claims

1. A device for adjusting the position of the structure of the wing profile with respect to the carriage, and hence the lift value, in ultralight aircraft, comprising a transmission which can be operated in flight and which is designed to modify the angle of the wing profile about a transverse hinging axis with respect to the carriage hanging in pendular fashion from the wing structure.

2. The device as claimed in claim 1, wherein said transmission is actuated by a servomotor operated by the pilot during the flight.

3. The device as claimed in claim 1, wherein said transmission is directly operated by the pilot during the flight.

4. The device as claimed in claim 1 or 2 or 3, wherein said transmission is of the non-reversible type so as to fix the wing structure in the position assumed on each occasion.

5. The device as claimed in claim 4, wherein the transmission comprises a servomotor with a self-braking motor.

6. The device as claimed in claim 4, wherein the transmission comprises a worm reduction unit.

7. The device as claimed in one of the preceding claims, in an ultralight aircraft comprising a transverse bar of the tie-rod type for manually displacing within certain limits a moving element to which the wing structure is connected, wherein said transmission is designed to incline the wing structure with respect to the moving element maneuvered by said bar.

8. The device as claimed in one of claims 1 to 6, wherein the structure of the wing profile is slidable longitudinally with respect to the attachment point of the carriage between two end-of-travel stops for modifying the point of attachment of the weight of the carriage and thus the angular position and wherein the transmission acts between the structure of the wing profile and said attachment point.

9. The device as claimed in one of claims 1 to 6, in an ultralight aircraft comprising a transverse bar of the tie-rod type for manually displacing within certain limits a moving element to which the wing structure is connected, wherein the wing structure is slidable with respect to said moving element, which in turn may be adjusted angularly by the conventional transverse bar of the tie-rod type.

10. The device as claimed in one of the preceding claims, which comprises two end-of-travel stops designed to limit the angular or longitudinal travel path along which the wing structure may be displaced by said transmission.
